(19) Europäisches Patentamt
European Patent Office
Office européen des brevets

(11) **EP 4 760 896 A1**

(12) **EUROPEAN PATENT APPLICATION**
published in accordance with Art. 153(4) EPC

(43) Date of publication:
**17.06.2026 Bulletin 2026/25**

(21) Application number: **25807978.9**

(22) Date of filing: **17.04.2025**

(51) International Patent Classification (IPC):
**H01M 50/131** (2021.01)   **H01M 50/145** (2021.01)
**H01M 50/133** (2021.01)   **H01M 50/119** (2021.01)
**H01M 10/0585** (2010.01)

(52) Cooperative Patent Classification (CPC):
**H01M 10/0585; H01M 50/119; H01M 50/131;**
**H01M 50/133; H01M 50/145;** Y02E 60/10

(86) International application number:
**PCT/KR2025/005262**

(87) International publication number:
**WO 2025/244298 (27.11.2025 Gazette 2025/48)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **20.05.2024 KR 20240065145**

(71) Applicant: **LG Energy Solution, Ltd.**
**Seoul 07335 (KR)**

(72) Inventor: **YUN, Hyun Woong**
**Daejeon 34122 (KR)**

(74) Representative: **Plasseraud IP**
**104 Rue de Richelieu**
**CS92104**
**75080 Paris Cedex 02 (FR)**

(54) **BATTERY CASE AND SECONDARY BATTERY COMPRISING SAME**

(57)   The present invention relates to a battery case having excellent durability and a secondary battery including the same, wherein the battery case according to the present invention includes a first polymer layer, a second polymer layer, and a gas barrier layer disposed between the first polymer layer and the second polymer layer, and includes at least one cup portion curved in one direction, wherein a K value according to Equation (1) is 63.0 or more.

Equation (1): $K = P/C + 50D$

In Equation (1),
P is a thickness value of the battery case which is measured in $\mu m$,
C is a depth value of the cup portion which is measured in mm, and
D is a ratio of a thickness of the gas barrier layer to a total thickness of the first polymer layer and the second polymer layer.

[FIG. 1]

**Description**

**TECHNICAL FIELD**

This application claims priority from Korean Patent Application No. 10-2024-0065145, filed on May 20, 2024, the disclosure of which is incorporated by reference herein.

The present invention relates to a battery case having excellent durability and a secondary battery including the same.

**BACKGROUND ART**

A secondary battery is generally prepared by a method in which electrode active material slurries are applied onto a positive electrode collector and a negative electrode collector to prepare a positive electrode and a negative electrode, respectively, the positive electrode and the negative electrode are stacked on both sides of a separator to form an electrode assembly having a predetermined shape, the electrode assembly is then accommodated in a battery case, and an electrolyte solution is injected.

If a thickness of the electrode assembly increases, that is, if a greater number of the electrodes are stacked, since more active material may be included, capacity of the battery may be increased. However, in a case in which thickness and configuration of the battery case are not properly adjusted accordingly, problems, such as cracks and corrosion, are likely to occur at an edge portion.

Thus, there is a need to develop a battery case having excellent durability while being able to accommodate a thick, high-capacity electrode assembly.

**DISCLOSURE OF THE INVENTION**

**TECHNICAL PROBLEM**

An aspect of the present invention provides a battery case designed such that a thickness of each layer and a depth of a cup portion satisfy a specific equation and a secondary battery in which durability is improved by including the battery case.

**TECHNICAL SOLUTION**

[1] The present invention provides a battery case including a first polymer layer, a second polymer layer, and a gas barrier layer disposed between the first polymer layer and the second polymer layer, and

including at least one cup portion curved in one direction,
wherein a K value according to Equation (1) is 63.0 or more.

$$\text{Equation (1): } K = P/C + 50D$$

In Equation (1),

P is a thickness value of the battery case which is measured in $\mu$m,
C is a depth value of the cup portion which is measured in mm, and
D is a ratio of a thickness of the gas barrier layer to a total thickness of the first polymer layer and the second polymer layer.

[2] The present invention provides the battery case of [1] above, wherein the battery case has a thickness of 100 $\mu$m to 1,000 $\mu$m.

[3] The present invention provides the battery case of [1] or [2] above, wherein the cup portion has a depth of 1 mm to 70 mm.

[4] The present invention provides the battery case of at least one of [1] to [3] above, wherein P/C of Equation (1) is 19.5 or more.

[5] The present invention provides the battery case of at least one of [1] to [4] above, wherein the first polymer layer has a thickness of 10 μm to 300 μm.

[6] The present invention provides the battery case of at least one of [1] to [5] above, wherein the second polymer layer has a thickness of 10 μm to 300 μm.

[7] The present invention provides the battery case of at least one of [1] to [6] above, wherein the gas barrier layer has a thickness of 50 μm to 900 μm.

[8] The present invention provides the battery case of at least one of [1] to [7] above, wherein the gas barrier layer includes at least one metal selected from stainless steel (SUS), nickel (Ni), iron (Fe), cobalt (Co), chromium (Cr), molybdenum (Mo), tantalum (Ta), tungsten (W), titanium (Ti), and rhenium (Re); or an alloy of the metal and aluminum (Al).

[9] The present invention provides the battery case of at least one of [1] to [8] above, wherein D of Equation (1) is 0.80 or more.

[10] The present invention provides a secondary battery including: an electrode assembly including a positive electrode, a negative electrode, and a separator disposed between the positive electrode and the negative electrode; an electrolyte; and the battery case of at least one of [1] to [9] above, wherein the electrode assembly and the electrolyte are accommodated in a cup portion of the battery case.

[11] The present invention provides the secondary battery of [10] above, wherein the secondary battery has an S value according to Equation (2) of 37.0 or more.

$$\text{Equation (2): } S = P/T \times N + 20D$$

In Equation (2),

P is a thickness value of the battery case which is measured in μm,

T is a thickness value of the electrode assembly which is measured in mm, wherein, when two or more electrode assemblies are included, T is a sum of thickness values of the two or more electrode assemblies,

N is the number of cup portions in the battery case, and

D is a ratio of a thickness of the gas barrier layer to a total thickness of the first polymer layer and the second polymer layer.

[12] The present invention provides the secondary battery of [10] or [11] above, wherein the electrode assembly has a thickness of 1 mm to 150 mm.

## ADVANTAGEOUS EFFECTS

A battery case according to the present invention is configured such that a thickness of each layer constituting the battery case satisfies a specific equation by reflecting a depth of a cup portion, wherein since there is a low possibility of cracks occurring at an edge portion even if a thick electrode assembly is accommodated, it has an advantage of preventing corrosion issues caused by such cracks.

## BRIEF DESCRIPTION OF THE DRAWINGS

FIG. 1 is a view illustrating a cross-sectional structure of a pouch film laminate according to an embodiment.
FIG. 2 and FIG. 3 are views illustrating a structure of a battery case according to an embodiment, respectively.
FIG. 4 is a view illustrating a structure of an electrode assembly according to an embodiment.

## MODE FOR CARRYING OUT THE INVENTION

Hereinafter, the present invention will be described in more detail.

Recently, rated capacity of a secondary battery is increasing as demand for batteries requiring high capacity, such as batteries for electric vehicles, increases. Accordingly, there is a trend toward an increase in size and thickness of an electrode assembly, and a thickness of a battery case also needs to increase in line with this trend.

For example, in a pouch type secondary battery, in a case in which a pouch is formed deeper to match the increased thickness of the electrode assembly, since more stretching occurs, a thickness of the pouch is decreased. If charge and discharge are repeated in this state, cracks may occur as a force is applied to the pouch which has become thin due to expansion/contraction of the electrode assembly, and this may lead to problems such as electrolyte solution leakage and corrosion of the battery.

Accordingly, these problems may be prevented by increasing the thickness of the battery case, but in a case in which the thickness of the battery case is increased indiscriminately, since there is a concern that energy density and durability of the case are reduced, there is a need to establish a standard so that a thickness of each layer constituting the battery case may be appropriately selected by reflecting the thickness of the electrode assembly.

Thus, the present inventors have found that excellent durability may be achieved when a depth of a cup portion, in which the electrode assembly is to be accommodated, and the thickness of each layer constituting the battery case satisfy a specific condition, thereby leading to the completion of the present invention.

A battery case according to the present invention is characterized in that it includes a first polymer layer, a second polymer layer, and a gas barrier layer disposed between the first polymer layer and the second polymer layer, and includes at least one cup portion curved in one direction, wherein a K value according to Equation (1) below is 63.0 or more.

$$\text{Equation (1): } K = P/C + 50D$$

In Equation (1),

P is a thickness value of the battery case which is measured in $\mu$m,
C is a depth value of the cup portion which is measured in mm, and
D is a ratio of a thickness of the gas barrier layer to a total thickness of the first polymer layer and the second polymer layer.

The K value according to Equation (1) may be 63.0 or more, preferably 70.0 or more, and more preferably 75.0 or more. However, considering energy density of a cell and insulation properties of the case, it is desirable that the K value is 500.0 or less, 300.0 or less, or 120.0 or less. If the K value is 63.0 or more, since the gas barrier layer with a sufficient thickness is achieved when considering the depth of the cup portion and the total thickness of the battery case, occurrence of cracks in the battery case due to an external force may be prevented.

Specifically, if a P/C value of Equation (1) decreases, that is, when the depth of the cup portion relative to the thickness of the battery case increases, there is a need to enhance durability of the battery case by increasing a D value, that is, the thickness of the gas barrier layer relative to the polymer layer. Since the gas barrier layer includes a metallic component, increasing its thickness relative to the polymer layer is advantageous for improving the durability of the battery case.

In contrast, in a case in which the thickness ratio of the gas barrier layer to the polymer layer is excessively increased to increase the durability, since problems, such as a reduction in sealing strength or dielectric breakdown due to damage to the outer polymer layer, may occur, deep forming of the cup portion may be limited.

Accordingly, the present invention is significant in that it provides a standard for determining how much the thickness of each layer constituting the battery case must be adjusted according to the depth of the cup portion through the K value according to Equation (1) to achieve excellent performance.

Hereinafter, each component of the present invention will be described in more detail.

## <u>\<Battery Case\></u>

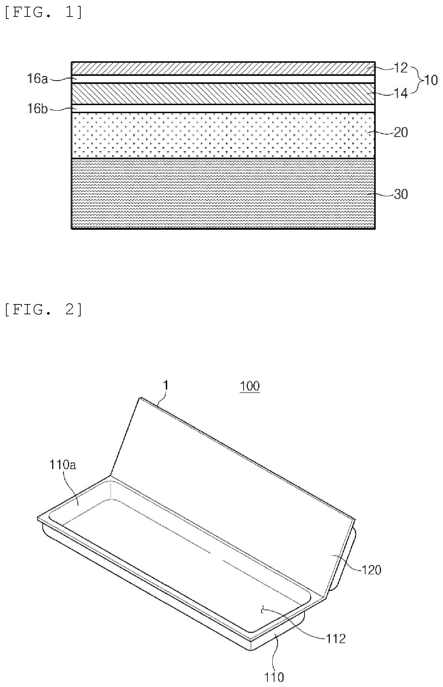

The battery case according to the present invention will be described with reference to FIGS. 1 to 3.

The battery case according to the present invention includes a first polymer layer 10, a second polymer layer 30, and a gas barrier layer 20 disposed between the first polymer layer 10 and the second polymer layer 30, and specifically, is prepared by forming a pouch film laminate in which the first polymer layer 10, the gas barrier layer 20, and the second polymer layer 30 are sequentially provided, wherein the battery case includes at least one cup portion 110a and 110b. FIG. 1 illustrates a cross-sectional structure of the pouch film laminate.

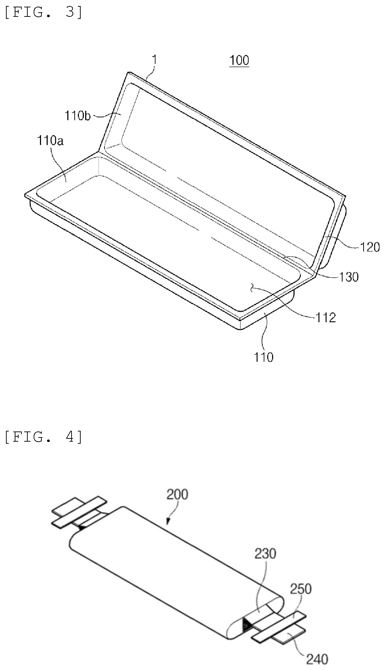

Embodiments of the battery case according to the present invention are illustrated in FIG. 2 and FIG. 3. The cup portion 110a and 110b is a space 112 for accommodating an electrode assembly (not shown) and an electrolyte (not shown), wherein it is prepared by drawing a pouch film laminate 1 using a punch or the like. In this case, the drawing may be performed by pressing a punch toward the second polymer layer 30 of the pouch film laminate 1.

The battery case 100 may include one cup portion 110a as illustrated in FIG. 2, or may include two cup portions 110a and 110b as illustrated in FIG. 3.

The battery case 100 according to the present invention includes a lower case 110 and an upper case 120, and the cup portion 110a and 110b may be formed in only one of the lower case 110 and the upper case 120, or may be formed in both of them. In a case in which the pouch film laminate 1 is formed by a 1-cup forming device, a battery case having one cup portion may be prepared as illustrated in FIG. 2, and in a case in which the pouch film laminate 1 is formed by a 2-cup forming device, a battery case having cup portions formed in both the lower case 110 and the upper case 120 may be prepared as illustrated in FIG. 3.

According to an embodiment of the present invention, the thickness of the battery case refers to a thickness of the pouch film laminate, wherein it may be in a range of 100 $\mu$m to 1,000 $\mu$m, particularly 110 $\mu$m to 900 $\mu$m, and more particularly 120 $\mu$m to 700 $\mu$m.

Also, the depth of the cup portion may be changed according to a thickness of the electrode assembly to be accommodated, but, for example, may be 1 mm or more, particularly 3 mm or more, and more particularly 7 mm or more, and may be 70 mm or less, particularly 60 mm or less, and more particularly 50 mm or less.

P/C of Equation (1) may be 19.5 or more, preferably, 23.0 or more. In a case in which the P/C value is 19.5 or more, since the thickness of the battery case is sufficiently secured when considering the depth of the cup portion, there is an advantage in that a proportion occupied by the gas barrier layer in the pouch film laminate may be reduced. However, considering the energy density of the cell, it is desirable that P/C is 250.0 or less, specifically, 100.0 or less.

Hereinafter, each layer of the battery case will be described in detail.

### First Polymer Layer

The first polymer layer 10 is disposed as an outermost layer of the battery case to protect the electrode assembly from external impact and electrically insulate it, wherein, for example, it may be formed of at least one polymer material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, and Teflon.

The first polymer layer 10 may have a single-layer structure, or may have a multilayer structure in which different polymer films 12 and 14 are laminated as illustrated in FIG. 1. In a case in which the first polymer layer 10 has the multilayer structure, an adhesive layer 16a may be disposed between the polymer films.

The first polymer layer 10 may have a thickness of 10 $\mu$m to 300 $\mu$m, preferably 20 $\mu$m to 250 $\mu$m, and more preferably 30 $\mu$m to 200 $\mu$m. That the thickness of the first polymer layer is 10 $\mu$m or more is advantageous in terms of durability. However, since formability may be reduced if the first polymer layer is excessively thick, it is desirable that the thickness of the first polymer layer is 300 $\mu$m or less. The above thickness is a thickness including the adhesive layer 16a when the first polymer layer 10 has the multilayer structure.

In a preferred embodiment, the first polymer layer 10 may be a laminate of a polyethylene terephthalate (PET) film and a Nylon film. In this case, it is desirable that the Nylon film is disposed toward the gas barrier layer 20, i.e., on an inner side, and the PET film is disposed toward a surface of the battery case.

Since polyethylene terephthalate (PET) has excellent durability and electrical insulation properties, the durability and insulation properties are excellent when the PET film is disposed toward the surface. However, with respect to the PET film, since adhesion to an aluminum alloy thin film constituting the gas barrier layer 20 is weak and a stretching behavior is also different, when the PET film is disposed toward the gas barrier layer, delamination between a base material layer and the gas barrier layer may occur during a forming process and a problem may occur in which the formability is reduced due to non-uniform stretching of the gas barrier layer. In contrast, since the Nylon film has a similar stretching behavior to the aluminum alloy thin film constituting the gas barrier layer 20, an effect of improving the formability may be obtained when the Nylon film is disposed between the polyethylene terephthalate and the gas barrier layer.

### Gas Barrier Layer

The gas barrier layer 20 is to secure mechanical strength of the battery case, block incoming and outgoing of gas or moisture from the outside of the secondary battery, and prevent leakage of an electrolyte.

Since the formability improves as the thickness of the gas barrier layer increases, a critical forming depth is increased and resistance to external stress after forming is improved, and thus, the gas barrier layer may have a thickness of 50 $\mu$m or more, preferably 70 $\mu$m or more, and more preferably 100 $\mu$m or more. However, since the energy density of the cell may decrease as the thickness of the gas barrier layer increases, the thickness of the gas barrier layer may be 900 $\mu$m or less, preferably 700 $\mu$m or less, and more preferably 500 $\mu$m or less.

The gas barrier layer may include at least one metal selected from stainless steel (SUS), nickel (Ni), iron (Fe), cobalt (Co), chromium (Cr), molybdenum (Mo), tantalum (Ta), tungsten (W), titanium (Ti), and rhenium (Re); or an alloy of the metal and aluminum (Al), and may specifically be formed of an aluminum alloy thin film.

Preferably, the aluminum alloy thin film may have an iron (Fe) content of 1.2 wt% to 1.7 wt%, preferably 1.3 wt% to 1.7 wt%, and more preferably 1.3 wt% to 1.45 wt%. In a case in which the iron (Fe) content in the aluminum alloy thin film is 1.2 wt% or more, occurrence of cracks and pinholes during forming may be prevented by increasing strength of the aluminum alloy thin film. However, considering flexibility, formability, and bendability, it is desirable that the iron (Fe) content is 1.7 wt% or less.

**Second Polymer Layer**

The second polymer layer 30 is for sealing the battery case by being bonded through thermal compression, wherein it is disposed as an innermost layer of the battery case.

The second polymer layer 30 must have insulation properties and corrosion resistance because it is a surface that is in contact with the electrolyte and the electrode assembly after cell assembly, and, since the second polymer layer completely seals the inside to block material movement between the inside/the outside, it must have high sealing properties.

The second polymer layer 30, for example, may be formed of at least one selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon, and, among them, it is particularly desirable to include polypropylene (PP) which has excellent mechanical properties, such as tensile strength, stiffness, surface hardness, wear resistance, and heat resistance, and excellent chemical properties such as corrosion resistance.

More specifically, the second polymer layer 30 may include polypropylene, cast polypropylene (CPP), acid modified polypropylene, a polypropylene-butylene-ethylene copolymer, or a combination thereof.

The second polymer layer 30 may have a single-layer structure, or may have a multilayer structure including two or more layers formed of different polymer materials.

The second polymer layer 30 may have a thickness of 10 $\mu$m to 300 $\mu$m, preferably 20 $\mu$m to 250 $\mu$m, and more preferably 30 $\mu$m to 200 $\mu$m. That the thickness of the second polymer layer is 30 $\mu$m or more is advantageous in terms of sealing durability and insulation properties. However, since the bendability may be reduced if the second polymer layer is excessively thick, it is desirable that the thickness of the second polymer layer is 300 $\mu$m or less.

D of Equation (1), that is, the ratio of the thickness of the gas barrier layer to the total thickness of the first polymer layer and the second polymer layer may be 0.80 or more, preferably 1.00 or more, and more preferably 1.20 or more. Since this means that the gas barrier layer, i.e., the metal layer accounts for a large proportion of the battery case, excellent durability may be secured even if a relatively thicker electrode assembly is accommodated when the D value is designed as described above. That is, even if the P/C value of Equation (1) decreases, it becomes easy to adjust the K value to 63.0 or more. However, considering the insulation properties of the case, it is desirable that D is 9.00 or less, particularly 5.00 or less, and more particularly 2.50 or less.

**<Secondary Battery>**

Hereinafter, a secondary battery including the above battery case will be described.

A secondary battery according to an embodiment of the present invention includes an electrode assembly including a positive electrode, a negative electrode, and a separator disposed between the positive electrode and the negative electrode; an electrolyte; and the battery case, wherein the electrode assembly and the electrolyte are accommodated in a cup portion of the battery case.

Specifically, referring to FIGS. 2 and 3, after the electrode assembly is accommodated in the cup portion 110a and 110b and an electrolyte solution is injected, the electrode assembly and the electrolyte may be isolated from the outside by folding the upper case 120 such that it is on an upper end of the lower case 110. Then, the secondary battery may be prepared by performing a sealing process through thermal compression of corner portions of the upper case 120 and the lower case 110.

The secondary battery according to the embodiment of the present invention may have an S value according to Equation (2) below of 37.0 or more, 40.0 or more, or 45.0 or more, and in this case, it is desirable that the durability of the battery case is appropriately secured when considering the thickness of the electrode assembly. However, considering energy density and insulation properties, the S value may be 400.0 or less, 300.0 or less, or 85.0 or less.

$$\text{Equation (2): } S = P/T \times N + 20D$$

In Equation (2),

P is a thickness value of the battery case which is measured in $\mu$m,
T is a thickness value of the electrode assembly which is measured in mm, wherein, when two or more electrode assemblies are included, T is a sum of thickness values thereof,
N is the number of cup portions in the battery case, and
D is a ratio of a thickness of the gas barrier layer to a total thickness of the first polymer layer and the second polymer layer.

Since the battery case has been described in detail above, the electrode assembly and the electrolyte will be described in more detail below.

**Electrode Assembly**

In the present invention, it is desirable that the electrode assembly is a stacked-type electrode assembly having a structure in which a positive electrode and a negative electrode are sequentially stacked with a separator therebetween. The present invention is suitable for using the stacked-type electrode assembly because it solves the problem of battery case damage that occurs when the electrode assembly becomes thick while utilizing a capacity improvement effect that may be obtained by stacking the electrodes in parallel.

A thickness of the electrode assembly may be in a range of 1 mm to 150 mm, particularly 3 mm to 120 mm, and more particularly 7 mm to 100 mm.

As illustrated in FIG. 4, the electrode assembly 200 may include a plurality of electrode tabs 230 welded to each other. The plurality of electrode tabs 230 may be connected to a plurality of electrodes 210, and may protrude from the electrode assembly 200 to the outside so that they may act as a path through which electrons may move between the inside and the outside of the electrode assembly 200.

The electrode tab 230 connected to the positive electrode and the electrode tab 230 connected to the negative electrode may protrude in different directions with respect to the electrode assembly 200. However, the present invention is not limited thereto, and it is also possible for the electrode tab 230 connected to the positive electrode and the electrode tab 230 connected to the negative electrode to protrude in the same direction side by side.

The positive electrode, the negative electrode, the separator, and the electrolyte may be used in the present invention without limitation as long as they are commonly used in a secondary battery, but the following description may be referred to as a preferred example.

The positive electrode is a sheet-type positive electrode, wherein it may include a positive electrode collector formed of a metal thin sheet with excellent conductivity, for example, an aluminum foil, and a positive electrode active material layer coated on one surface or both surfaces thereof. The negative electrode is a sheet-type negative electrode, wherein it may include a negative electrode collector formed of a metal thin sheet with excellent conductivity, for example, a copper (Cu) or nickel (Ni) foil, and a negative electrode active material layer coated on one surface or both surfaces thereof.

The positive electrode active material layer may include a lithium metal oxide including lithium and a transition metal, such as cobalt, manganese, and/or nickel, as a positive electrode active material, and may further include a conductive agent and/or a binder, if necessary. Various materials commonly used in the preparation of a secondary battery may be used without limitation as the positive electrode active material, the conductive agent, and the binder.

Specifically, the positive electrode may include at least one selected from the group consisting of a lithium nickel-based composite oxide, a lithium manganese-based composite oxide, and a lithium iron phosphate-based composite oxide as a positive electrode active material, and may preferably include a lithium nickel-based composite oxide, and the lithium nickel-based composite oxide may be represented by Formula 1 below.

$$[\text{Formula 1}] \qquad \text{Li}_{1+x}(\text{Ni}_a\text{Co}_b\text{Mn}_c\text{M}_d)\text{O}_2$$

In Formula 1,

M is at least one selected from the group consisting of tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Ga), samarium (Sm), calcium (Ca), cerium (Ce), niobium (Nb), magnesium (Mg), boron (B), and molybdenum (Mo), and

$-0.4 \leq x \leq 0.4$, $0.30 \leq a \leq 1$, $0 \leq b \leq 0.70$, $0 \leq c \leq 0.70$, $0 \leq d \leq 0.10$, and $a+b+c+d=1$.

$1+x$ represents a molar ratio of lithium in the lithium nickel-based composite oxide, wherein x may satisfy $-0.1 \leq x \leq 0.2$, or $0 \leq x \leq 0.2$. When the molar ratio of the lithium satisfies the above range, a crystal structure of the lithium nickel-based composite oxide may be stably formed.

a represents a molar ratio of nickel among total metals excluding lithium in the lithium nickel-based composite oxide, wherein a may satisfy $0.70 \leq a < 1$, $0.80 \leq a < 1$, or $0.90 \leq a < 1$. When the molar ratio of the nickel satisfies the above range, high energy density may be exhibited to achieve high capacity.

b represents a molar ratio of cobalt among the total metals excluding lithium in the lithium nickel-based composite oxide, wherein b may satisfy $0 < b \leq 0.25$, $0 < b \leq 0.15$, or $0 < b \leq 0.05$. When the molar ratio of the cobalt satisfies the above range, good resistance characteristics and output characteristics may be achieved.

c represents a molar ratio of manganese among the total metals excluding lithium in the lithium nickel-based composite oxide, wherein c may satisfy $0 < c \leq 0.25$, $0 < c \leq 0.15$, or $0 < c \leq 0.05$. When the molar ratio of the manganese satisfies the above range, structural stability of the positive electrode active material is excellent.

d represents a molar ratio of element M among the total metals excluding lithium in the lithium nickel-based composite oxide, wherein d may satisfy $0 \leq d \leq 0.08$, $0 \leq d \leq 0.05$, or $0 \leq d \leq 0.03$.

Specifically, a, b, c, and d of Formula 1 may satisfy $0.80 \leq a < 1$, $0 < b \leq 0.15$, $0 < c \leq 0.15$, and $0 \leq d \leq 0.05$, respectively.

Since resistivity of the positive electrode is formed low when the lithium nickel-based composite oxide is an NCM oxide containing all of nickel, cobalt, and manganese, the above-described phenomenon of reducing insulation properties due to an increase in the thickness of the electrode assembly becomes more evident, and thus, an effect resulting from configuring to satisfy Equation (1) may be maximized.

The lithium manganese-based composite oxide may be at least one selected from the group consisting of $Li_pMn_{1-q}M^a_qA_2$, $Li_pMn_2O_{4-r}X_r$, $Li_pMn_{2-q}M^a_qM^b_rA_4$, $Li_pCo_{1-q}M^a_qA_2$, $Li_pCo_{1-q}M^a_qO_{2-r}X_r$, $Li_pNi_{1-q}M^a_qO_{2-r}X_r$, $Li_pNi_{1-q}CO_qO_{2-r}X_r$, $Li_pNi_{1-q-r}CO_qM^a_rA_w$, $Li_pNi_{1-q-r}CO_qM^a_rO_{2-w}X_w$, $Li_pNi_{1-q-r}Mn_qM^a_rA_w$, and $Li_pNi_{1-q-r}Mn_qM^a_rO_{2-w}X_w$, wherein p, q, r, and w satisfy $0.9 \leq p \leq 1.6$, $0 \leq q \leq 1$, $0 \leq r \leq 1$, and $0 \leq w \leq 2$, respectively, $M^a$ and $M^b$ are the same as or different from each other and are one or more elements selected from the group consisting of Mg, Al, Co, potassium (K), sodium (Na), Ca, silicon (Si), Ti, tin (Sn), V, germanium (Ge), Ga, B, arsenic (As), Zr, Mn, Cr, Fe, Sr, V, and rare earth elements, A is at least one element selected from the group consisting of oxygen (O), fluorine (F), sulfur (S), and phosphorus (P), and X is at least one element selected from the group consisting of F, S, and P.

Also, the lithium iron phosphate-based composite oxide may be represented by Formula 2 below.

$$[\text{Formula 2}] \qquad LiFe_{1-x}M^c_kPO_4$$

In Formula 2,
$M^c$ is at least one selected from Ni, Co, Mn, Al, Mg, Y, Zn, In, ruthenium (Ru), Sn, antimony (Sb), Ti, tellurium (Te), Nb, Mo, Cr, Zr, W, iridium (Ir), and V, and
$0 \leq k < 1$.

The negative electrode active material layer may include a negative electrode active material, for example, a carbonaceous material such as graphite; metals or alloys composed of the metals; oxides of the metals; and composites of the metals and carbon, and may further include a conductive agent and/or a binder, if necessary. Various materials commonly used in the preparation of a secondary battery may be used without limitation as the negative electrode active material, the conductive agent, and the binder.

Conventional porous polymer films typically used as a separator, for example, polyolefin-based porous polymer films, such as an ethylene homopolymer, a propylene homopolymer, an ethylene/butene copolymer, an ethylene/hexene copolymer, and an ethylene/methacrylate copolymer, may be used alone or in a laminated form as the separator. Also, a polyolefin-based porous polymer film coated with inorganic particles (e.g., $Al_2O_3$) or a typical porous nonwoven fabric, for example, a nonwoven fabric formed of high melting point glass fibers or polyethylene terephthalate fibers may be used, but is not limited thereto.

## Electrolyte

In an embodiment of the present invention, as the electrolyte, any electrolyte, in which lithium ions generated by an electrochemical reaction at the electrode during charge and discharge may move, may be used without limitation, and for example, an electrolyte, in which a lithium salt is dissolved in a non-aqueous organic solvent, may be used.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_2$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. A concentration of the lithium salt may be appropriately changed within a normally usable range, but the lithium salt may be used in a concentration range of 0.1 M to 5.0 M, preferably, 0.1 M to 3.0 M.

Any non-aqueous organic solvent may be used as the non-aqueous organic solvent without particular limitation so long as it may function as a medium through which ions involved in an electrochemical reaction of the battery may move. For example, a cyclic carbonate-based solvent, such as ethylene carbonate (EC), propylene carbonate (PC), and vinylene carbonate, a linear carbonate-based organic solvent such as dimethyl carbonate (DMC), diethyl carbonate (DEC), dipropyl carbonate, and ethyl methyl carbonate (EMC), or a mixed organic solvent thereof may be used.

The secondary battery may be used in various devices. For example, the secondary battery may be used in electric bicycles or electric cars such as electric vehicles and hybrid electric vehicles (HEVs).

Thus, according to another embodiment of the present invention, a battery module including the secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, the present invention will be described in detail, according to specific examples.

**[Examples and Comparative Examples: Preparation of Battery Cases]**

**Example 1**

A first polymer layer with a thickness of 150 $\mu$m was formed by sequentially bonding a polyethylene terephthalate (PET) film with a width of 266 mm, a length of 50 m, and a thickness of 50 $\mu$m and a nylon film with a width of 266 mm, a length of 50 m, and a thickness of 100 $\mu$m to one surface of an aluminum alloy thin film with a width of 266 mm, a length of 50 m, and a thickness of 250 $\mu$m using a urethane adhesive via a dry lamination method.

Next, a pouch film laminate was prepared by forming a 100 $\mu$m thick sealant layer (second polymer layer) by melting cast polypropylene (CPP) at a high temperature and then coextruding it on a surface opposite to the surface of the aluminum alloy thin film on which the first polymer layer was formed. A total thickness of the pouch film laminate was 500 $\mu$m.

After the pouch film laminate was cut to a size of 130 mm $\times$ 266 mm, drawing was performed in a forming device having a forming part with a size of 100 mm $\times$ 216 mm to prepare a 1-cup type battery case including a cup portion with a depth of 2 mm. Corners and edges of a punch and the forming part of the forming device were filleted, the corner of the punch had a curvature of 2 mm, the edge thereof had a curvature of 1 mm, the corner of the forming part had a curvature of 2.3 mm, and the edge thereof had a curvature of 1 mm. In addition, clearance of the punch and the forming part was 0.3 mm.

**Examples 2 to 34 and Comparative Examples 1 to 18**

Battery cases were prepared by using the same process as Example 1 except that the depth of the cup portion, the thickness of the polymer layer, and a thickness of a gas barrier layer were changed as shown in Table 1 below.

**[Experimental Examples]**

**Experimental Example 1: Corrosion Evaluation**

A stacked-type electrode assembly having an overall length of 210 mm and an overall width of 95 mm was prepared by alternatingly stacking a positive electrode including Li[$Ni_{0.8}Co_{0.1}Mn_{0.1}$]$O_2$, as a positive electrode active material, and a negative electrode including graphite, as a negative electrode active material, with a safety reinforced separator (SRS) disposed therebetween. In this case, the electrode assemblies were prepared in seven thicknesses: 1.9 mm, 3.9 mm, 5.9 mm, 7.9 mm, 9.9 mm, 11.9 mm, and 13.9 mm, and the electrode assemblies with different thicknesses were used depending on the depth of the cup portion of the battery case, as shown in Table 1 below.

After the electrode assembly was accommodated in the cup portion of each of the battery cases prepared in Examples 1 to 34 and Comparative Examples 1 to 18, an electrolyte solution, which was prepared by dissolving 1.0 M $LiPF_6$ in an organic solvent in which ethylene carbonate (EC) and ethyl methyl carbonate (EMC) were mixed in a volume ratio of 30:70, was injected, the battery case was then sealed, and a formation process was performed to prepare a pouch type secondary battery.

After preparing 10 secondary batteries each corresponding to each of the examples and the comparative examples, the prepared secondary batteries were charged at a constant current of 0.33 C-rate to 4.2 V in a room-temperature chamber at 25°C and then discharged at a constant current of 0.33 C to 2.5 V. Next, charging and discharging were repeated 1,000 times under the same conditions as above, cell appearance inspection was performed to confirm the number of corroded cells among 10 cells, and the results thereof are listed in Table 1 below.

[Table 1]

| | Pouch thickness (μm, P) | Electrode Assembly thickness (mm, T) | Cup portion depth (mm, C) | Polymer layer(μm) thickness First (PET) | First (Nylon) | Second | Total | Gas barrier layer thickness (μm) | D | P/C | K of Equation (1) | Whether K ≥ 63 | s of Equation (2) | Whether S ≥ 37 | The number of corroded cells |
|---|---|---|---|---|---|---|---|---|---|---|---|---|---|---|---|
| Example 1 | 500 | 1.9 | 2 | 50 | 100 | 100 | 250 | 250 | 1 | 250.0 | 300 | O | 283.2 | O | 0/10 |
| Example 2 | 500 | 3.9 | 4 | 50 | 100 | 100 | 250 | 250 | 1 | 125.0 | 175 | O | 148.2 | O | 0/10 |
| Example 3 | 500 | 5.9 | 6 | 50 | 100 | 100 | 250 | 250 | 1 | 83.3 | 133.3 | O | 104.7 | O | 0/10 |
| Example 4 | 500 | 7.9 | 8 | 50 | 100 | 100 | 250 | 250 | 1 | 62.5 | 112.5 | O | 83.3 | O | 0/10 |
| Example 5 | 500 | 9.9 | 10 | 50 | 100 | 100 | 250 | 250 | 1 | 50.0 | 100 | O | 70.5 | O | 0/10 |
| Example 6 | 500 | 11.9 | 12 | 50 | 100 | 100 | 250 | 250 | 1 | 41.7 | 91.7 | O | 62.0 | O | 0/10 |
| Example 7 | 500 | 13.9 | 14 | 50 | 100 | 100 | 250 | 250 | 1 | 35.7 | 85.7 | O | 56.0 | O | 0/10 |
| Example 8 | 300 | 1.9 | 2 | 20 | 40 | 90 | 150 | 150 | 1 | 150.0 | 200 | O | 177.9 | O | 0/10 |
| Example 9 | 300 | 3.9 | 4 | 20 | 40 | 90 | 150 | 150 | 1 | 75.0 | 125 | O | 96.9 | O | 0/10 |
| Example 10 | 300 | 5.9 | 6 | 20 | 40 | 90 | 150 | 150 | 1 | 50.0 | 100 | O | 70.8 | O | 0/10 |
| Example 11 | 300 | 7.9 | 8 | 20 | 40 | 90 | 150 | 150 | 1 | 37.5 | 87.5 | O | 58.0 | O | 0/10 |
| Example 12 | 300 | 9.9 | 10 | 20 | 40 | 90 | 150 | 150 | 1 | 30.0 | 80 | O | 50.3 | O | 0/10 |
| Example 13 | 300 | 11.9 | 12 | 20 | 40 | 90 | 150 | 150 | 1 | 25.0 | 75 | O | 15.2 | O | 0/10 |
| Example 14 | 300 | 13.9 | 14 | 20 | 40 | 90 | 150 | 150 | 1 | 21.1 | 71.4 | O | 41.6 | O | 0/10 |
| Example 15 | 213 | 1.9 | 2 | 13 | 20 | 80 | 113 | 100 | 0.88 | 106.5 | 150.7 | O | 129.8 | O | 0/10 |
| Example 16 | 213 | 3.9 | 4 | 13 | 20 | 80 | 113 | 100 | 0.838 | 53.3 | 97.5 | O | 72.3 | O | 0/10 |
| Example 17 | 213 | 5.9 | 6 | 13 | 20 | 80 | 113 | 100 | 0.88 | 35.5 | 79.7 | O | 53.8 | O | 0/10 |
| Example 18 | 213 | 7.9 | 8 | 13 | 20 | 80 | 113 | 100 | 0.88 | 26.6 | 70.9 | O | 44.7 | O | 0/10 |
| Example 19 | 213 | 9.9 | 10 | 13 | 20 | 80 | 113 | 100 | 0.88 | 21.3 | 65.5 | O | 39.2 | O | 0/10 |
| Comparat. Example 1 | 213 | 11.9 | 12 | 13 | 20 | 80 | 113 | 100 | 0.88 | 17.8 | 62 | X | 35.6 | X | 1/10 |
| Comparat. Example 2 | 213 | 13.9 | 14 | 13 | 20 | 80 | 113 | 100 | 0.88 | 15.2 | 59.5 | X | 33.0 | X | 2/10 |

(continued)

| | Pouch thickness (μm, P) | Electrode Assembly thickness (mm, T) | Cup portion depth (mm, C) | Polymer layer(μm) thickness | | | | Gas barrier layer thickness (μm) | D | P/C | K of Equation (1) | Whether K ≥ 63 | s of Equation (2) | Whether S ≥ 37 | The number of corroded cells |
| | | | | First (PET) | First (Nylon) | Second | Total | | | | | | | | |
|---|---|---|---|---|---|---|---|---|---|---|---|---|---|---|---|
| Example 20 | 183 | 1.9 | 2 | 13 | 20 | 65 | 98 | 85 | 0.87 | 91.5 | 134.9 | O | 113.7 | O | 0/10 |
| Example 21 | | 3.9 | 4 | 13 | 20 | 65 | 98 | 85 | 0.87 | 45.8 | 89.1 | O | 64.3 | O | 0/10 |
| Example 22 | | 5.9 | 6 | 13 | 20 | 65 | 98 | 85 | 0.87 | 30.5 | 73.9 | O | 48.4 | O | 0/10 |
| Example 23 | | 7.9 | 8 | 13 | 20 | 65 | 98 | 85 | 0.87 | 22.9 | 66.2 | O | 40.5 | O | 0/10 |
| Comparat. Example 3 | | 9.9 | 10 | 13 | 20 | 65 | 98 | 85 | 0.87 | 18.3 | 61.7 | X | 35.8 | X | 1/10 |
| Comparat. Example 4 | | 11.9 | 12 | 13 | 20 | 65 | 98 | 85 | 0.87 | 15.3 | 58.6 | X | 32.7 | X | 2/10 |
| Comparat. Example 5 | | 13.9 | 14 | 13 | 20 | 65 | 98 | 85 | 0.87 | 13.1 | 56.4 | X | 30.5 | X | 2/10 |
| Example 24 | | 9.9 | 10 | 8 | 15 | 60 | 83 | 100 | 1.20 | 18.3 | 78.5 | O | 42.6 | O | 0/10 |
| Example 25 | | 11.9 | 12 | 8 | 15 | 60 | 83 | 100 | 1.20 | 15.3 | 75.5 | O | 39.5 | O | 0/10 |
| Example 26 | | 13.9 | 14 | 8 | 15 | 50 | 73 | 110 | 1.51 | 13.1 | 88.4 | O | 43.3 | O | 0/10 |
| Comparat. Example 6 | | 9.9 | 10 | 18 | 25 | 60 | 103 | 80 | 0.78 | 18.3 | 57.1 | X | 34.0 | X | 2/10 |
| Comparat. Example 7 | | 11.9 | 12 | 18 | 25 | 60 | 103 | 80 | 0.78 | 15.3 | 54.1 | X | 30.9 | X | 3/10 |
| Comparat. Example 8 | | 13.9 | 14 | 18 | 25 | 60 | 103 | 80 | 0.78 | 13.1 | 51.9 | X | 28.7 | X | 3/10 |
| Example 27 | | 1.9 | 2 | 12 | 20 | 50 | 82 | 71 | 0.87 | 76.5 | 119.8 | O | 97.8 | O | 0/10 |
| Example 28 | | 3.9 | 4 | 12 | 20 | 50 | 82 | 71 | 0.87 | 38.3 | 81.5 | O | 56.5 | O | 0/10 |
| Example 29 | | 5.9 | 6 | 12 | 20 | 50 | 82 | 71 | 0.87 | 25.5 | 68.8 | O | 43.2 | O | 0/10 |
| Comparat. Example 9 | | 7.9 | 8 | 12 | 20 | 50 | 82 | 71 | 0.87 | 19.1 | 62.4 | X | 36.7 | X | 1/10 |

| | Pouch thickness ($\mu$m, P) | Electrode Assembly thickness (mm, T) | Cup portion depth (mm, C) | Polymer layer($\mu$m) thickness | | | | Gas barrier layer thickness ($\mu$m) | D | P/C | K of Equation (1) | Whether K ≥ 63 | s of Equation (2) | Whether S ≥ 37 | The number of corroded cells |
| | | | | First (PET) | First ( Nylon ) | Second | Total | | | | | | | | |
|---|---|---|---|---|---|---|---|---|---|---|---|---|---|---|---|
| Comparat. Example 10 | 153 | 9.9 | 10 | 12 | 20 | 50 | 82 | 71 | 0.87 | 15.3 | 58.6 | X | 32.8 | X | 2/10 |
| Comparat. Example 11 | | 11.9 | 12 | 12 | 20 | 50 | 82 | 71 | 0.87 | 12.8 | 56 | X | 30.2 | X | 3/10 |
| Comparat. Example 12 | | 13.9 | 14 | 12 | 20 | 50 | 82 | 71 | 0.87 | 10.9 | 54.2 | X | 28.3 | X | 4/10 |
| Example 30 | | 7.9 | 8 | 8 | 20 | 40 | 68 | 85 | 1.25 | 19.1 | 81.6 | 0 | 44.4 | 0 | 0/10 |
| Example 31 | | 9.9 | 10 | 8 | 20 | 40 | 68 | 85 | 1.25 | 15.3 | 77.8 | 0 | 40.5 | 0 | 0/10 |
| Comparat. Example 13 | | 7.9 | 8 | 8 | 25 | 60 | 93 | 60 | 0.65 | 19.1 | 51.4 | X | 32.3 | X | 2/10 |
| Comparat. Example | | 9.9 | 10 | 8 | 25 | 60 | 93 | 60 | 0.65 | 15.3 | 47.6 | X | 28.4 | X | 3/10 |
| Example 32 | 120 | 1.9 | 2 | 9 | 15 | 40 | 64 | 56 | 0.88 | 60.0 | 103.8 | 0 | 80.7 | 0 | 0/10 |
| Example 33 | | 3.9 | 4 | 9 | 15 | 40 | 64 | 56 | 0.88 | 30.0 | 73.8 | 0 | 48.3 | 0 | 0/10 |
| Example 34 | | 5.9 | 6 | 9 | 15 | 40 | 64 | 56 | 0.88 | 20.0 | 63.8 | 0 | 37.8 | 0 | 0/10 |
| Comparat. Example 15 | | 7.9 | 8 | 9 | 15 | 40 | 64 | 56 | 0.88 | 15.0 | 58.8 | X | 32.7 | X | 1/10 |
| Comparat. Example 16 | | 9.9 | 10 | 9 | 15 | 40 | 64 | 56 | 0.88 | 12.0 | 55.8 | X | 29.6 | X | 3/10 |
| Comparat. Example 17 | | 11.9 | 12 | 9 | 15 | 40 | 64 | 56 | 0.88 | 10.0 | 53.8 | X | 27.6 | X | 4/10 |
| Comparat. Example 18 | | 13.9 | 14 | 9 | 15 | 40 | 64 | 56 | 0.88 | 8.6 | 52.3 | X | 26.1 | X | 5/10 |

Through the results of Table 1, it may be confirmed that no corrosion occurred at all in the secondary batteries having an S value of 37.0 or more by using the battery cases of Examples 1 to 34 in which the thickness of the battery case, the depth of the cup portion, the thickness of the gas barrier layer, and the thickness of the polymer layer were adjusted to satisfy K ≥ 63.0, but corrosion occurred in one or more cells for the secondary batteries having an S value of less than 37.0 by using the battery cases of Comparative Examples 1 to 18 in which K < 63.0.

That is, it may be confirmed that there was an effect of improving corrosion resistance of the pouch type secondary battery by adjusting the K value of Equation (1) to 63.0 or more.

**Experimental Example 2: Cell Performance Evaluation**

Among the secondary batteries prepared in Experimental Example 1, the secondary batteries having a thickness of the electrode assembly of 7 mm or more (Examples 4 to 7, 11 to 14, 18, 19, 23 to 26, 30, and 31 and Comparative Examples 1 to 18) were charged at a constant current of 0.33 C-rate to 4.2 V in a room-temperature chamber at 25°C and then discharged at a constant current of 0.33 C to 2.5 V to confirm initial capacity and energy density. The energy density was calculated by multiplying discharge capacity of the cell by an average voltage and then dividing it by a unit volume, and the average voltage was a value obtained by dividing a curve integral value of a capacity-voltage profile by capacity. Average values of the initial capacities and the energy densities, which were confirmed in 10 cells, are listed in Table 2 below.

Next, charging and discharging were repeated 1,000 times under the same conditions as above, capacity retention after 1,000 charge and discharge cycles relative to the initial capacity was checked for each of the 10 cells, and an average value thereof was then calculated and listed in Table 2 below.

[Table 2]

| | Pouch thickness (μm, P) | Elect rode assembly thickness (mm, T) | K of Equation (1) | Whether K≥63 | S of Equation (2) | Whether S≥37 | Initial capacity (mAh) | Energy density (Wh/L) | Capacity retention (%) |
|---|---|---|---|---|---|---|---|---|---|
| Example 4 | 500 | 7.9 | 112.5 | O | 83.3 | O | 31 | 353 | 86 |
| Example 5 | | 9.9 | 100 | O | 70.5 | O | 38.9 | 361 | 88 |
| Example 6 | | 11.9 | 91.7 | O | 62.0 | O | 46.6 | 367 | 91 |
| Example 7 | | 13.9 | 85.7 | O | 56.0 | O | 54.5 | 371 | 94 |
| Example 11 | 300 | 7.9 | 87.5 | O | 58.0 | O | 31 | 370 | 86 |
| Example 12 | | 9.9 | 80 | O | 50.3 | O | 38.9 | 375 | 88 |
| Example 13 | | 11.9 | 75 | O | 45.2 | O | 46.6 | 379 | 91 |
| Example 14 | | 13.9 | 71.4 | O | 41.6 | O | 54.5 | 381 | 94 |
| Example 18 | 213 | 7.9 | 70.9 | O | 44.6 | O | 31 | 378 | 86 |
| Example 19 | | 9.9 | 65.5 | O | 39.1 | O | 38.9 | 381 | 88 |
| Comparative Example 1 | | 11. 9 | 62 | X | 35.5 | X | 40. 6 | 384 | 84 |
| Comparative Example 2 | | 13.9 | 59.5 | X | 32.9 | X | 54.5 | 386 | 80 |

(continued)

|  | Pouch thickness (μm, P) | Elect rode assembly thickness (mm, T) | K of Equation (1) | Whether K≥63 | S of Equation (2) | Whether S≥37 | Initial capacity (mAh) | Energy density (Wh/L) | Capacity retention (%) |
|---|---|---|---|---|---|---|---|---|---|
| Example 23 | 183 | 7.9 | 66.2 | O | 40.6 | O | 31 | 380 | 86 |
| Comparative Example 3 | | 9.9 | 61.7 | X | 35.9 | X | 38.9 | 384 | 83 |
| Comparative Example 4 | | 11.9 | 58.6 | X | 32.8 | X | 46.6 | 386 | 79 |
| Comparative Example 5 | | 13.9 | 56.4 | X | 30.6 | X | 54.5 | 387 | 79 |
| Example 24 | | 9.9 | 78.5 | O | 42.5 | O | 38.9 | 384 | 88 |
| Example 25 | | 11.9 | 75.5 | O | 39.4 | O | 46.6 | 386 | 91 |
| Example 26 | | 13.9 | 88.4 | O | 43.4 | O | 54.5 | 387 | 94 |
| Comparative Example 6 | | 9.9 | 57.1 | X | 34.1 | X | 38.9 | 384 | 75 |
| Comparative Example 7 | | 11.9 | 54.1 | X | 31.0 | X | 46.6 | 386 | 71 |
| Comparative Example 8 | | 13.9 | 51.9 | X | 28.8 | X | 54.5 | 387 | 71 |
| Comparative Example 9 | 153 | 7.9 | 62.4 | X | 36.8 | X | 31 | 383 | 80 |
| Comparative Example 10 | | 9.9 | 58.6 | X | 32.9 | X | 38.9 | 386 | 76 |
| Comparative Example 11 | | 11.9 | 56 | X | 30.3 | X | 46.6 | 388 | 72 |
| Comparative Example 12 | | 13.9 | 54.2 | X | 28.4 | X | 54.5 | 389 | 68 |
| Example 30 | | 7.9 | 81.6 | O | 44.4 | O | 31 | 383 | 86 |
| Example 31 | | 9.9 | 77.8 | O | 40.5 | O | 38.9 | 386 | 88 |
| Comparative Example 13 | | 7.9 | 51.4 | X | 32.4 | X | 31 | 383 | 76 |
| Comparative Example 14 | | 9.9 | 47.6 | X | 28.5 | X | 38.9 | 386 | 72 |
| Comparative Example 15 | 120 | 7.9 | 58.8 | X | 32.8 | X | 31 | 386 | 80 |
| Comparative Example 16 | | 9.9 | 55.8 | X | 29.7 | X | 38.9 | 388 | 72 |
| Comparative Example 17 | | 11.9 | 53.8 | X | 27.7 | X | 46.6 | 390 | 68 |
| Comparative Example 18 | | 13.9 | 52.3 | X | 26.2 | X | 54.5 | 391 | 60 |

Through the results of Table 2, it may be confirmed that the secondary batteries using the battery cases of the examples satisfying K ≥ 63.0 satisfied S ≥ 37.0 and showed a tendency for initial capacity to increase and lifetime to improve as the depth of the cup portion was increased, that is, as the electrode assembly became thicker.

In contrast, with respect to the secondary batteries using the battery cases of the comparative examples in which K < 63.0, it may be confirmed that S < 37.0 and initial capacity increased as the thickness of the electrode assembly was increased, but life characteristics were degraded.

Since a force generated by expansion/contraction of the electrode assembly during operation of the battery was increased as the thickness of the electrode assembly was increased, a level of durability required for the battery case was also increased, but unlike the battery cases prepared in the examples, the battery cases prepared in the comparative examples did not satisfy this level.

That is, it may be confirmed that there was an effect of improving life characteristics of the pouch type secondary battery by adjusting the K value of Equation (1) to 63.0 or more.

**Claims**

1. A battery case comprising a first polymer layer, a second polymer layer, and a gas barrier layer disposed between the first polymer layer and the second polymer layer, and

   comprising at least one cup portion curved in one direction,
   wherein a K value according to Equation (1) is 63.0 or more:

   $$Equation\ (1):\ K = P/C + 50D$$

   wherein, in Equation (1),
   P is a thickness value of the battery case which is measured in $\mu$m,
   C is a depth value of the cup portion which is measured in mm, and
   D is a ratio of a thickness of the gas barrier layer to a total thickness of the first polymer layer and the second polymer layer.

2. The battery case of claim 1, wherein the battery case has a thickness of 100 $\mu$m to 1,000 $\mu$m.

3. The battery case of claim 1, wherein the cup portion has a depth of 1 mm to 70 mm.

4. The battery case of claim 1, wherein P/C of Equation (1) is 19.5 or more.

5. The battery case of claim 1, wherein the first polymer layer has a thickness of 10 $\mu$m to 300 $\mu$m.

6. The battery case of claim 1, wherein the second polymer layer has a thickness of 10 $\mu$m to 300 $\mu$m.

7. The battery case of claim 1, wherein the gas barrier layer has a thickness of 50 $\mu$m to 900 $\mu$m.

8. The battery case of claim 1, wherein the gas barrier layer comprises at least one metal selected from stainless steel (SUS), nickel (Ni), iron (Fe), cobalt (Co), chromium (Cr), molybdenum (Mo), tantalum (Ta), tungsten (W), titanium (Ti), and rhenium (Re); or an alloy of the metal and aluminum (Al).

9. The battery case of claim 1, wherein D of Equation (1) is 0.80 or more.

10. A secondary battery comprising:

    an electrode assembly including a positive electrode, a negative electrode, and a separator disposed between the positive electrode and the negative electrode; an electrolyte; and the battery case of claim 1,
    wherein the electrode assembly and the electrolyte are accommodated in a cup portion of the battery case.

11. The secondary battery of claim 10, wherein the secondary battery has an S value according to Equation (2) of 37.0 or more:

    $$Equation\ (2):\ S = P/T \times N + 20D$$

    wherein, in Equation (2),
    P is a thickness value of the battery case which is measured in $\mu$m,

T is a thickness value of the electrode assembly which is measured in mm, wherein, when two or more electrode assemblies are included, T is a sum of thickness values of the two or more electrode assemblies,
N is the number of cup portions in the battery case, and
D is a ratio of a thickness of the gas barrier layer to a total thickness of the first polymer layer and the second polymer layer.

12. The secondary battery of claim 10, wherein the electrode assembly has a thickness of 1 mm to 150 mm.

[FIG. 1]

[FIG. 2]

[FIG. 3]

[FIG. 4]

**EP 4 760 896 A1**

## INTERNATIONAL SEARCH REPORT

| International application No. |
|---|
| **PCT/KR2025/005262** |

| A. | CLASSIFICATION OF SUBJECT MATTER |
|---|---|

**H01M 50/131**(2021.01)i; **H01M 50/145**(2021.01)i; **H01M 50/133**(2021.01)i; **H01M 50/119**(2021.01)i; **H01M 10/0585**(2010.01)i

According to International Patent Classification (IPC) or to both national classification and IPC

| B. | FIELDS SEARCHED |
|---|---|

Minimum documentation searched (classification system followed by classification symbols)

H01M 50/131(2021.01); H01M 10/052(2010.01); H01M 10/058(2010.01); H01M 50/105(2021.01); H01M 50/116(2021.01); H01M 50/124(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리머(polymer), 두께(thickness), 깊이(depth), 가스 배리어(gas barrier), 컵(cup)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2021-0127636 A (LG CHEM, LTD.) 22 October 2021 (2021-10-22) See paragraphs [0035]-[0115], claim 1 and figures 1 and 2. | 1-10 |
| Y | | 11,12 |
| Y | KR 10-2022-0045884 A (LG ENERGY SOLUTION, LTD.) 13 April 2022 (2022-04-13) See paragraphs [0041], [0050], [0055], [0057], [0061] and [0069], claims 5 and 6 and figure 2. | 11,12 |
| A | KR 10-2023-0145964 A (LG ENERGY SOLUTION, LTD.) 18 October 2023 (2023-10-18) See paragraph [0040]. | 1-12 |
| A | KR 10-2024-0010601 A (SK ON CO., LTD.) 24 January 2024 (2024-01-24) See paragraph [0133]. | 1-12 |

✓ Further documents are listed in the continuation of Box C.  ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 July 2025** | **17 July 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2025/005262** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 219759673 U (NINGDE CONTEMPORARY AMPEREX TECHNOLOGY CO., LIMITED) 26 September 2023 (2023-09-26)<br>        See paragraphs [0065] and [0067]. | 1-12 |

Form PCT/ISA/210 (second sheet) (July 2022)

## INTERNATIONAL SEARCH REPORT
### Information on patent family members

International application No.

**PCT/KR2025/005262**

| Patent document cited in search report | | | Publication date (day/month/year) | Patent family member(s) | | | Publication date (day/month/year) |
|---|---|---|---|---|---|---|---|
| KR | 10-2021-0127636 | A | 22 October 2021 | CN | 113540623 | A | 22 October 2021 |
| | | | | CN | 115244767 | A | 25 October 2022 |
| | | | | CN | 215955368 | U | 04 March 2022 |
| | | | | EP | 4095991 | A1 | 30 November 2022 |
| | | | | EP | 4095991 | A4 | 26 July 2023 |
| | | | | EP | 4095991 | B1 | 11 December 2024 |
| | | | | EP | 4498486 | A2 | 29 January 2025 |
| | | | | EP | 4498486 | A3 | 02 April 2025 |
| | | | | ES | 3004038 | T3 | 11 March 2025 |
| | | | | JP | 2023-518998 | A | 09 May 2023 |
| | | | | JP | 2024-125408 | A | 18 September 2024 |
| | | | | JP | 7516545 | B2 | 16 July 2024 |
| | | | | KR | 10-2551089 | B1 | 05 July 2023 |
| | | | | PL | 4095991 | T3 | 10 March 2025 |
| | | | | US | 2023-0089546 | A1 | 23 March 2023 |
| | | | | WO | 2021-210908 | A1 | 21 October 2021 |
| KR | 10-2022-0045884 | A | 13 April 2022 | CN | 116349064 | A | 27 June 2023 |
| | | | | CN | 116349064 | B | 18 June 2024 |
| | | | | EP | 4203148 | A1 | 28 June 2023 |
| | | | | JP | 2023-539537 | A | 14 September 2023 |
| | | | | JP | 2025-060659 | A | 10 April 2025 |
| | | | | JP | 7604634 | B2 | 23 December 2024 |
| | | | | KR | 10-2552691 | B1 | 10 July 2023 |
| | | | | US | 11682808 | B2 | 20 June 2023 |
| | | | | US | 2022-0109203 | A1 | 07 April 2022 |
| | | | | WO | 2022-075750 | A1 | 14 April 2022 |
| KR | 10-2023-0145964 | A | 18 October 2023 | CN | 113782878 | A | 10 December 2021 |
| | | | | CN | 215955369 | U | 04 March 2022 |
| | | | | EP | 4135105 | A1 | 15 February 2023 |
| | | | | EP | 4135105 | A4 | 11 December 2024 |
| | | | | JP | 2023-526609 | A | 22 June 2023 |
| | | | | JP | 2024-026624 | A | 28 February 2024 |
| | | | | JP | 7416979 | B2 | 17 January 2024 |
| | | | | KR | 10-2021-0152969 | A | 16 December 2021 |
| | | | | KR | 10-2611432 | B1 | 08 December 2023 |
| | | | | US | 2023-0207931 | A1 | 29 June 2023 |
| | | | | WO | 2021-251736 | A1 | 16 December 2021 |
| KR | 10-2024-0010601 | A | 24 January 2024 | US | 2024-0021929 | A1 | 18 January 2024 |
| CN | 219759673 | U | 26 September 2023 | | None | | |

Form PCT/ISA/210 (patent family annex) (July 2022)

**EP 4 760 896 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240065145